# EUROPEAN PATENT APPLICATION

(11) **EP 2 942 116 A1**
(43) Date of publication of application: **11.11.2015**
(21) Application number: 15166998.3
(22) Date of filing: 08.05.2015
(51) Int. Cl.: B08B 1/00, B08B 1/04, B08B 1/02, F24J 2/46

(54) **WASHING APPARATUS FOR A SURFACE**

(30) Priority: 09.05.2014 IT UD20140077
(71) Applicant: Pavanetto, Jader, 30174 Venezia (IT)
(72) Inventor: Pavanetto, Jader, 30174 Venezia (IT)
(74) Representative: Petraz, Gilberto Luigi

(57) **Abstract**

Washing apparatus for a surface comprising a plurality of brushes (13) having a mainly oblong development, mounted on at least one rotation shaft (14) and selectively rotatable around an axis of rotation (X). The washing apparatus also comprises at least one movement unit (16) configured to move the brushes (13) in a direction of movement (D) transverse to the axis of rotation (X). Finally, the washing apparatus comprises a drive member (15) comprising at least one motor (53) to make the brushes (13) rotate around the axis of rotation (X) and to drive the movement unit (16).

The movement unit (16) comprises a first, substantially direct kinematic connection (37) between the motor (53) and the rotation shaft (14), by means of which the brushes (13) are made to rotate around the axis of rotation (X), and a second, substantially direct kinematic connection (44), independent from the first kinematic connection (37), between the rotation shaft (14) and the movement unit (16), to move the washing apparatus in a direction of movement (D) substantially transverse to the axis of rotation (X).

## Description

### FIELD OF THE INVENTION

The present invention concerns a washing apparatus for flat surfaces such as, merely by way of example, solar panels, either thermal or photovoltaic, glass surfaces or similar surfaces that need periodic cleaning.

In particular, the washing apparatus can be the automatic or semi-automatic type, it can be installed permanently on the surfaces to be treated or it can be mobile with the possibility of moving it manually or with suitable means.

The apparatus is applied particularly for cleaning and washing surfaces which need to be treated frequently and rapidly with the minimum consumption of energy and water.

### BACKGROUND OF THE INVENTION

In the field of solar or photovoltaic panels, one of the most serious problems is to keep the surfaces of the panels clean, to ensure high efficiency in converting the solar radiation hitting the active surfaces of the panels.

In fact, it is known that one limitation to the conversion efficiency of such panels can be due to material that is accidentally deposited on them, such as dirt, leaves, branches, shrubs, bird droppings or other.

This explains the need to carry out periodic cleaning operations on solar or photovoltaic panels.

This operation can be performed manually by a specialized operator, or by the user himself, but with the risk of damaging the panels and also of the operator or user falling, especially when the plants are installed on the pitch of roofs or roofing, both inclined and horizontal, of the buildings.

Automated solutions are also known, which provide to use motorized means with tractors and mechanical arms equipped to perform the maintenance washing operations.

However, although these apparatuses make the washing operations quick, they are limited in their field of application, due to constraints of size and, not least, due to the frequent damage they can cause on the surfaces where they are used (e.g. photovoltaic fields) because of the unpredictable situations present for example on the ground or on the surfaces where the motorized mean moves.

Fixed or mobile washing apparatuses are also known, which need guides, tracks and/or support structures to be attached peripherally to the surface to be treated, and which are located during use in contact with the capturing surface of the panel. Examples of such washing apparatuses are described in DE-A-103.17.479, DE-U-20.2009.012816, CN-Y-201.338.000, DE-U-20.2008.003.298 and EP-A-2.437.001.

These washing apparatuses comprise a frame on which a plurality of brushes are mounted, with a mainly oblong development and which affect, during use, a large part of the surface to be treated.

The brushes are mounted on respective support shafts and are made to rotate around the latter by an actuation device.

To cover the whole surface to be cleaned, solutions are also known in which the brushes are disposed aligned and consecutive with respect to each other. An example of this solution is shown in WO-A-2013/080135.

In this known solution, the actuation device comprises a motor suitable to make a torsion bar rotate. The torsion bar is mounted parallel to the axial development of the brushes.

Between the torsion bar and the brushes transmission members are provided, to transmit motion from the torsion bar to the brushes.

In this way, with a single drive member it is possible to activate all the brushes of the apparatus.

Moreover, one or more movement units are mounted on the frame, and are suitable to move the whole apparatus on the surface to be treated, for example to move from one surface to another.

The movement units are disposed in at least two positions, distanced along the longitudinal extension of the brushes, and they receive motion from the torsion bar by means of transmission members.

However, this washing apparatus is very complex to make and makes it very difficult to simplify and adapt, on each occasion, the specific sizes of the washing apparatus to the specific application.

One of the problems of this apparatus and similar known solutions, for example described in the documents cited above, is that they do not allow to adapt, simply and quickly, the configuration of the apparatus to different applications from those for which they were designed, and therefore require a study of the sizes of the components variable from case to case and depending on the sizes of the panels that have to be cleaned.

Furthermore, known solutions are not able to guarantee a uniform cleaning of the surfaces treated due to possible interruptions or empty spaces that can be present between the brushes to allow to mount the kinematic connection members or the support elements of the brushes or the shafts themselves.

One purpose of the present invention is to obtain a washing apparatus that can be adapted, quickly and simply, to different applications, irrespective of the surface where they are operating and the space where the surfaces are installed.

Another purpose of the present invention is to obtain a washing apparatus that can be made up simply and quickly depending on the specific sizes on which the washing apparatus is to be installed.

Another purpose of the present invention is to obtain a washing apparatus with a smaller number of operating components compared with the solutions described above, thus reducing the assembly time and the production costs.

Another purpose of the present invention is to obtain a washing apparatus that allows to guarantee a uniform cleaning of the surface.

Another purpose of the present invention is to obtain a washing apparatus that is simple and economical.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, an apparatus for washing a surface, for example a panel, comprises a plurality of brushes with a mainly oblong development disposed consecutive and coaxial to each other along an axis of rotation to define a first row of brushes.

The brushes are mounted solidly on at least one rotation shaft defining said axis of rotation and selectively rotatable around the latter.

The washing apparatus also comprises at least one movement unit configured to move the brushes in a direction of movement transverse to the axis of rotation.

The washing apparatus also comprises a drive member provided with at least one motor to make the brushes rotate around the axis of rotation and to drive the movement unit.

In accordance with one aspect of the present invention, the drive member comprises a first direct kinematic connection between the motor and the rotation shaft, configured to make the first row of brushes rotate around the axis of rotation. The drive member also comprises a second kinematic connection, independent from the first kinematic connection, installed in an intermediate position along the rotation shaft and between two of the brushes of the first row, and configured to directly connect the rotation shaft and the movement unit and determine the drive of the latter and consequently move the whole washing apparatus in a direction substantially transverse to the axis of rotation.

In this way, the rotation shaft of the brushes, as well as having the function of supporting the latter, also has the function of transmitting the motion to the movement unit, which, thanks to the presence of the second kinematic connection, independent from the first kinematic connection, can be positioned in any position whatsoever along the longitudinal extension of the brushes.

This allows to adapt on each occasion, and depending on the specific design and dimensional requirements, the position of the movement unit with respect to the surface on which it must slide.

Within the field of cleaning photovoltaic panels it is possible, for example, to position each movement unit on each occasion so that they are moveable on the support profiles of the sheets of glass rather than on the sheets of glass themselves. In this way it is possible to avoid damaging the sheets and guarantee an adequate and homogenous cleaning of all the surface that is treated on each occasion.

Adapting the position of the movement units can therefore be chosen on each occasion depending on the overall sizes of the surface to be washed, or positioning requirements of the movement units on the surface.

In particular, it can be provided to use brushes with a predetermined length on each occasion depending on specific installation requirements.

This solution, compared with known solutions, means that the invention is not constrained by dedicated actuation components to transmit motion to the brushes and the movement units: these components in fact constrain the sizes and the applications.

The rotation shaft according to the present invention allows to have a single shaft usable both to make the brushes rotate and also to transmit motion to the movement units.

Furthermore, thanks to the configuration described above, the drive motor of the brushes can be positioned in any position of the washing apparatus, as its position is not limited to the ends of the brushes as usually provided in known solutions. This solution therefore allows to optimize the disposition of the components also with regard to specific requirements of space and application, and therefore to prevent, for example, interference with parts disposed at the ends of the surfaces to be washed.

A possible variant of the present invention can provide that the motor is positioned inside the brushes, or integrated in them. Forms of embodiment of the present invention also concern a method to make a washing apparatus which provides to:
- solidly mount a plurality of brushes with a mainly oblong development on a rotation shaft, disposing them consecutive and coaxial with respect to each other along an axis of rotation to define a first row of brushes;
- predispose at least one movement unit to move the brushes in a direction of movement transverse to the axis of rotation;
- predispose at least one drive member comprising at least one motor to make the brushes rotate around the axis of rotation and to drive the movement unit.

According to some aspects of the present invention, the method to make a washing apparatus provides to install, between the motor and the rotation shaft, a first kinematic connection to transmit the motion directly from the motor to the brushes, and to make the latter rotate around the axis of rotation, and to install, in an intermediate position of the length of the rotation shaft and between two of the brushes of the first row, a second kinematic connection, independent from the first kinematic connection, that directly connects the rotation shaft to the movement unit.

Other forms of embodiment of the present invention concern a method for washing a surface that provides to:
- predispose a plurality of brushes installing them on a rotation shaft and disposing them consecutive and coaxial with respect to each other along an axis of rotation to define a first row of brushes;
- move the first row of brushes in a direction of movement transverse to the axis of rotation by means of a movement unit;
- drive the rotation of the brushes around the axis of rotation by means of a motor;
- drive the movement unit by means of the motor.

According to one aspect of the washing method according to the present invention, driving the rotation of the brushes of the first row provides to transmit the motion from the motor to the rotation shaft by means of a first direct kinematic connection between the motor and the rotation shaft, and driving the movement unit provides to transmit the motion directly, from the rotation shaft to the movement unit, by means of a second kinematic connection installed in an intermediate position of the length of the rotation shaft and between two of the brushes of the first row.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of a washing apparatus according to the present invention;
- fig. 2 is a section view along the line II-II of fig. 1;
- fig. 3 is an enlarged perspective view of a detail of fig. 1;
- fig. 4 is another enlarged perspective view of a detail of fig. 1;
- fig. 5 is a lateral view of a variant of the washing apparatus according to the present invention;
- fig. 6 is an upper view of a detail of fig. 1;
- fig. 7 is an enlarged lateral view of fig. 6;
- fig. 8 is a schematic representation of a washing apparatus mounted on a movement slider;
- fig. 9 is a schematic view of a washing apparatus in accordance with a possible variant.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

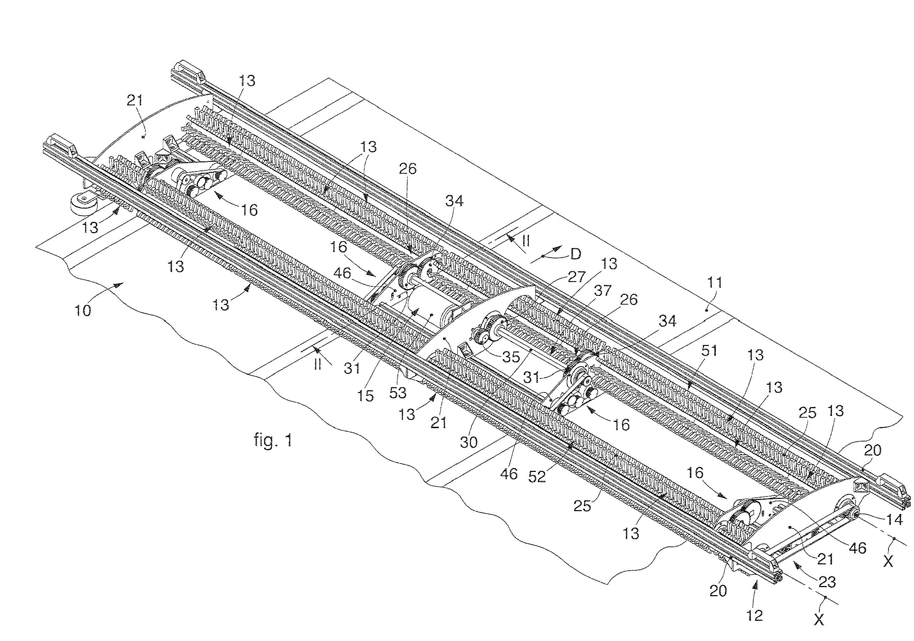

Figs. 1-7 are used to describe forms of embodiment of a washing apparatus 10 configured to clean a surface 11, for example a capturing surface of one or more photovoltaic panels, one or more solar heating panels or the glass surface of a building.

According to the present description, the washing apparatus 10 can be resting on the surface 11.

The washing apparatus 10 can be configured to move on the surface 11 in a direction of advance D.

According to the present description, the washing apparatus 10 can comprise a plurality of brushes 13 configured to clean the surface 11.

In some forms of embodiment, the brushes 13 can each be configured to rotate around an axis of rotation X disposed transverse to the direction of advance D.

The rotation of the brushes 13 around their axis of rotation X and the translation in their direction of advance D allows to clean the surface 11.

In some forms of embodiment, shown for example in figs. 1-4, each brush 13 can be conformed substantially as a roller, or can have a cylindrical shape with an axial extension along the axis of rotation X.

In some forms of embodiment, see for example fig. 1, the brushes 13 can be disposed consecutive and coaxial along the axis of rotation X to define a first row 51 of brushes 13.

According to the form of embodiment in fig. 1, the washing apparatus 10 can also comprise a second row 52 of brushes 13 disposed facing the first row 51 and installed on a respective rotation shaft 14. The first row 51 and the second row 52 can each comprise two or more brushes 13.

In some forms of embodiment, the first row 51 can be disposed parallel to the second row 52.

The brush 13 can be provided with a plurality of bristles, filaments or strips 25 that contact the surface 11 during use, and clean it.

Each brush 13 is mounted on a rotation shaft 14 integrated with the latter so that the rotation of the rotation shaft 14 also causes the rotation of the brushes 13.

In some forms of embodiment, the brushes 13 of the first row 51 or respectively those of the second row 52 are mounted on a common rotation shaft 14.

In particular, it is provided that the brushes 13 are installed on the respective rotation shaft 14 consecutive and coaxial with respect to each other along the axis of rotation X.

In some forms of embodiment, the rotation shaft 14 can have a circular, square or rectangular cross section shape, or polygonal in general. The brushes 13 can be integrated with the rotation shaft 14 by same-shape coupling or by mechanical connection members, such as tongues or keys.

The washing apparatus 10 can comprise a frame 12 on which the at least one rotation shaft 14 is mounted, in this case both rotation shafts 14.

The rotation shafts 14 can be mounted rotatable on the frame 12 by support elements such as bearings, bronzes or suchlike.

The frame 12 can comprise at least two side-members 20 located facing each other and substantially parallel to the brushes 13. The first row 51 and the second row 52 of brushes 13 are mounted between the side-members 20.

The frame 12 can also comprise connection elements 21 to connect the side-members 20 to each other and to keep them reciprocally distanced.

According to one form of embodiment, the washing apparatus 10 comprises a drive member 15 configured to make at least the first row 51 of brushes 13 rotate, in this case both the first row 51 and also the second row 52 of brushes 13.

According to the solution in fig. 1, the drive member 15 comprises a motor, in this case an electric motor 53 provided to make the brushes 13 at least of the first row 51 of brushes 13 rotate.

According to a possible solution, the electric motor 53 can be the low-voltage type.

In the form of embodiment in fig. 1, the electric motor 53 can be connected kinematically both to the first row 51 of brushes 13 and also to the second row 52 of brushes 13 to make them rotate around the respective rotation shafts 14.

In particular, the electric motor 53 is directly connected, by means of a first kinematic connection 37, to the brushes 13 of the first row 51, in order to make them selectively rotate.

The first kinematic connection 37 can comprise at least one of transmission shafts, toothed wheels, pulleys, belts, chains, cables, return shafts, connection flanges, connection brackets or possible combinations thereof.

The first kinematic connection 37 can be configured to effect a reduction or multiplication of speed between the electric motor 53 and the brushes 13.

According to the solution in fig. 1, the electric motor 53 is mounted between the first 51 and the second row 52, and in an intermediate position of the longitudinal extension of the rows 51, 52.

The electric motor 53 can be mounted on one of the connection members 21 of the side-members 20.

According to possible solutions of the present invention, the first kinematic connection 37 can comprise a pinion 35 mounted on the rotation shaft of the electric motor 53, and configured to transmit motion to a driven toothed wheel 29 mounted solidly on at least one of the brushes 13, in this case on the brushes 13 of the first row 51.

The transfer of motion from the pinion 35 to the driven toothed wheel 29 can be done directly, that is, without the interposition of other mechanical kinematisms, or by interposing other toothed wheels or motion transfer means.

According to the form of embodiment in fig. 1, the pinion 35 transmits motion to a return toothed wheel 27 mounted integrated on a return shaft 30.

In particular, the return toothed wheel 27 is mounted in an intermediate position of the axial extension of the return shaft 30, which in turn is located parallel with respect to the axis of the electric motor 53.

On each of the two ends of the return shaft 30 a respective drive wheel 31 is mounted, each of which configured to transmit motion to one of the brushes 13 of the first row 51.

The drive wheels 31, in turn, are kinematically connected to the driven toothed wheels 29 associated with the brushes 13 of the first row 51.

The kinematic connection between the driven toothed wheel 29 and the drive wheel 31 can be direct, that is, without other kinematic members interposed.

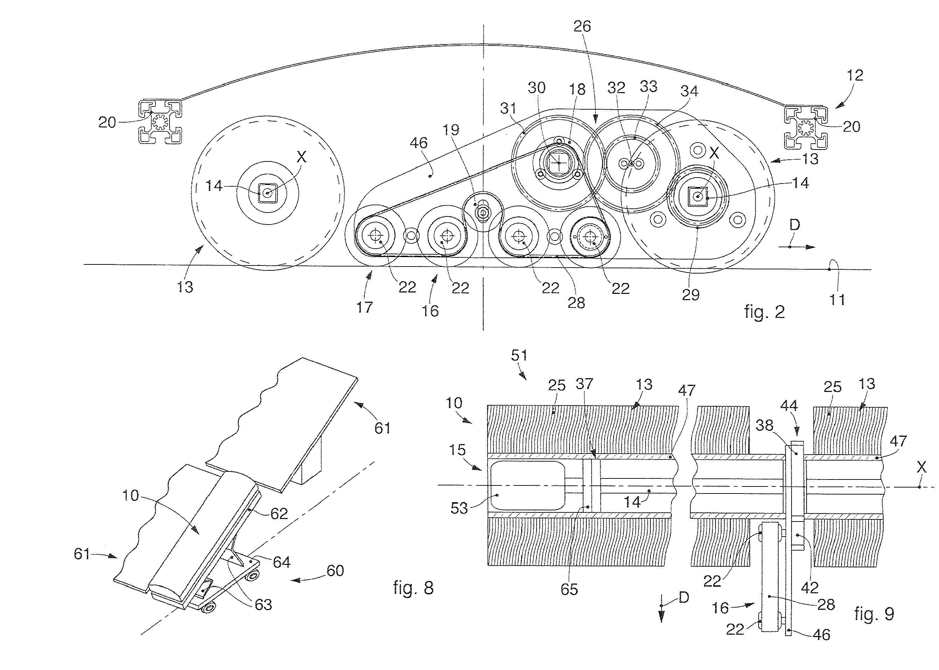

According to the form of embodiment in fig. 2, between the driven toothed wheel 29 and the drive wheel 31 a reduction or multiplication stage 26 can be interposed, to transfer motion from the return shaft 30 to the brush 13.

The reduction stage 26 can comprise a first toothed wheel 33 and a second toothed wheel 34 mounted coaxial and integrated with each other on a pin 32 interposed between the drive wheel 31 and the driven toothed wheel 29.

In particular, the first toothed wheel 33 is configured to engage on the drive wheel 31 while the second toothed wheel 34 is configured to engage on the driven toothed wheel 29.

In this way, when the electric motor 53 is driven, the pinion 35 makes the return shaft 30 rotate by means of the return toothed wheel 27.

The return shaft 30, in turn, makes the drive wheels 31 rotate, which by means of the respective reduction stages 26, transmit motion, each to one of the driven toothed wheels 29 mounted integral with one of the brushes 13 of the first row 51.

In a possible form of embodiment, the drive member 15 can also comprise kinematic transmission devices 23 to transmit the rotary motion from the rotation shaft 14 of the first row 51 of brushes 13 to the rotation shaft 14 of the second row 52 of brushes 13.

In the form of embodiment in fig. 1, the kinematic transmission devices 23 are configured to transmit the motion from one of the brushes 13 of the first row 51 to one of the brushes 13 of the second row 52.

For example, it can be provided that the kinematic transmission devices 23 are configured to transmit motion between the brushes 13 of the first row 51 and those of the second row 52 located facing the latter.

In particular, it can be provided that the first kinematic transmission devices 23, visible in fig. 1, are associated with a first end of the rotation shaft 14 of the first row 51 and to a first end of the rotation shaft 14 of the second row 52. Furthermore, second kinematic transmission devices can be provided, not visible in the drawings, associated with a second end of the rotation shaft 14 of the first row 51 and to a second end of the rotation shaft 14 of the second row 52.

The kinematic transmission devices 23 can comprise at least one of either a belt, a cable, a chain, gears, pulleys or drive and driven toothed wheels or a possible combination thereof.

In the form of embodiment in fig. 1, the kinematic transmission devices 23 comprise drive and driven toothed wheels mounted at the free ends of the rotation shaft 14 of the first row 51 and the rotation shaft 14 of the second row 52 and respective toothed belts, of which only one is visible in fig. 1, each wound between a drive toothed wheel and a driven toothed wheel, to transfer the motion between the first row 51 and the second row 52 of brushes 13.

According to the present invention, the washing apparatus 10 can comprise one or more movement units 16 configured to move the brushes 13 in a direction of movement D on the surface 11 to be treated.

Each movement unit 16 can be mounted on a respective support element 43, which is attached in turn on the frame 12.

Each movement unit 16 can also be positioned in an intermediate position along the axial extension of the brushes 13.

According to one form of embodiment of the present invention, the drive member 15 comprises a second kinematic connection 44, independent of the first kinematic connection 37, and which directly connects the rotation shaft 14 and the movement unit 16. In particular, the second kinematic connection 44 takes the rotation motion from the rotation shaft 14 and transmits it to the movement unit 16 which determines a movement motion of the brushes 13 in the direction of movement D.

According to the present invention, the second kinematic connection 44 is installed in any intermediate position whatsoever along the longitudinal extension of the rotation shaft 14 and between at least two of the brushes 13 that belong to the first row 51 or the second row 52.

This particular configuration, both in the design step and in a possible redesign of the apparatus, allows to position each movement unit 16 and the respective second kinematic connection 44 in any position whatsoever along the extension of the axis of rotation X. This makes it no longer necessary to design on each occasion the second kinematic connection 44 for each form of embodiment.

Furthermore, the configuration described allows to use components, for example shafts, brushes or other, that are in common use and that can be adapted or associated on each occasion in modular fashion so as to respect the positioning requirements of the movement units 16.

In fact, with the present invention, it is possible to adopt brushes 13 of different lengths which can be reciprocally coupled in modular fashion to define a predefined length of the first row 51 or second row 52 of brushes 13. Moreover, the length of each of the brushes 13 can be suitably defined for example by cutting them to the desired length.

This solution therefore allows to dispose the movement units 16 in predefined positions on the surface 11 that the brushes 13 have to treat, for example in correspondence with support profiles, or joint or connection segments between panels that define the surface 11.

In this way it is possible to obtain a washing apparatus 10 that structurally remains substantially the same in all its essential components but their disposition is varied depending on specific requirements such as the length of the surface 11.

Furthermore, this configuration also allows to prevent zones of the surface 11 from being cleaned by the brushes 13 due to the presence of the movement unit 16. In fact, with the solution according to the present invention, it is possible to position the movement units 16 in positions on the surface 11 which do not necessarily need cleaning, such as for example in correspondence with the support profiles, brackets or support elements in general.

This solution also allows to synchronize the drive of all the movement units 16, since all these receive motion from the same rotation shaft 14.

Each movement unit 16 can comprise at least one of either a wheel, a belt, a cable or a possible combination thereof.

According to a possible form of embodiment, one movement unit 16 is associated with each rotation shaft 14 of every brush 13. This allows to make uniform the forward movement of the apparatus 10 along the whole longitudinal extension, preventing possible swerving or deflections of the latter.

The second kinematic connection 44 comprises at least one of either of a transmission shaft, toothed wheel, pulley, belts, chains, cables, return shafts or possible combinations thereof.

According to a possible solution, each second kinematic connection 44 comprises a drive toothed wheel 38 mounted integrated with the rotation shaft 14 and a driven toothed wheel 42 provided to activate the respective movement unit 16 and kinematically connected to the drive toothed wheel 38.

Between the drive toothed wheel 38 and the driven toothed wheel 42 one or more reduction stages 39 can be provided.

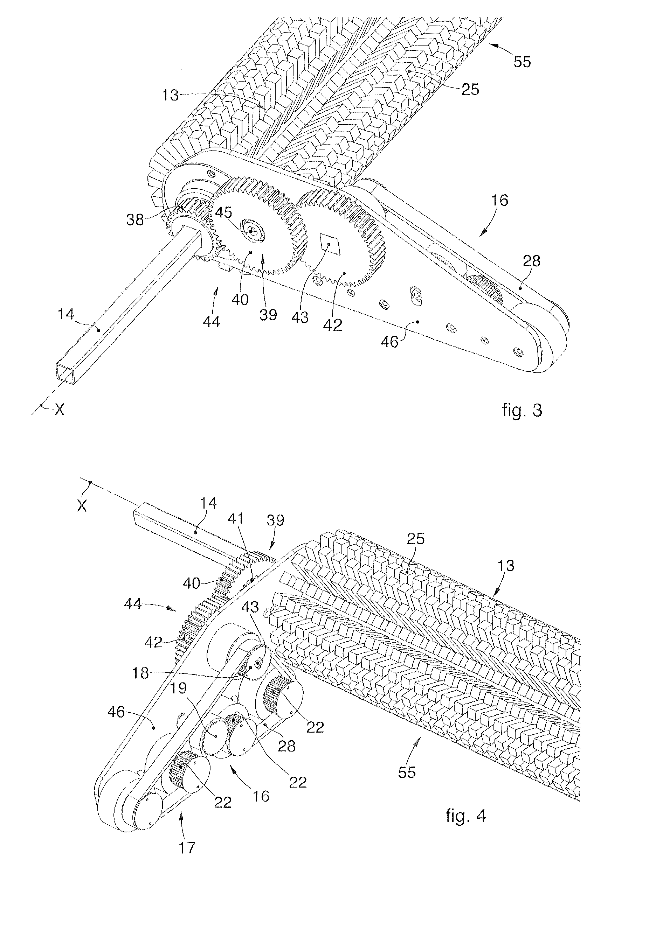

According to the form of embodiment in figs. 3 and 4, the reduction stage 39 comprises a first toothed wheel 40 and a second toothed wheel 41 mounted coaxially and solidly with each other on a common rotation pin 45 interposed between the rotation shaft 14 and the driven toothed wheel 42.

The first toothed wheel 40 engages on the drive toothed wheel 38 while the second toothed wheel 41 engages on the driven toothed wheel 42.

The driven toothed wheel 42 is mounted on a support pin 43.

According to the solution shown in figs. 2-4, the movement unit 16 comprises a plurality of wheels 22 mounted on the support element 46 and disposed aligned with each other in a direction parallel to the direction of advance D.

The circumferential surfaces of each wheel 22 are located during use resting on the surface 11 to be treated, and the wheels 22 keep the brushes 13 at a determinate height with respect to the surface 11.

The wheels 22 can be selectively actuated to be made to rotate around their axis of rotation. In particular, the wheels 22 receive motion from the second kinematic connection 44.

Each of the wheels 22 is connected to a kinematic connection member, in this case a belt 28 that winds around toothed hubs of the wheels 22 and around an actuation wheel 18, selectively rotatable by the second kinematic connection 44.

In particular, it is provided that the actuation wheel 18 is mounted integrated with the support pin 43 and that it is made to rotate by the action of the driven toothed wheel 42 of the second kinematic connection 44.

The movement unit 16 can also comprise at least one tensioning wheel 19, mounted for example on the support element 46, and configured to keep the belt 28 tense.

According to a possible form of embodiment, a respective movement unit 16 can also be possibly associated with the first kinematic connection 37, for example the movement unit 16 shown in fig. 1 and located in a central position in the apparatus 10, to determine the movement of the washing apparatus 10.

It can be provided, for example, that the actuation wheel 18 of each movement unit 16 is mounted coaxial and integral with the return shaft 30.

An actuation of the movement unit 16 corresponds to a rotation of the return shaft.

It is clear that modifications and/or additions of parts may be made to the washing apparatus 10 as described heretofore, without departing from the field and scope of the present invention.

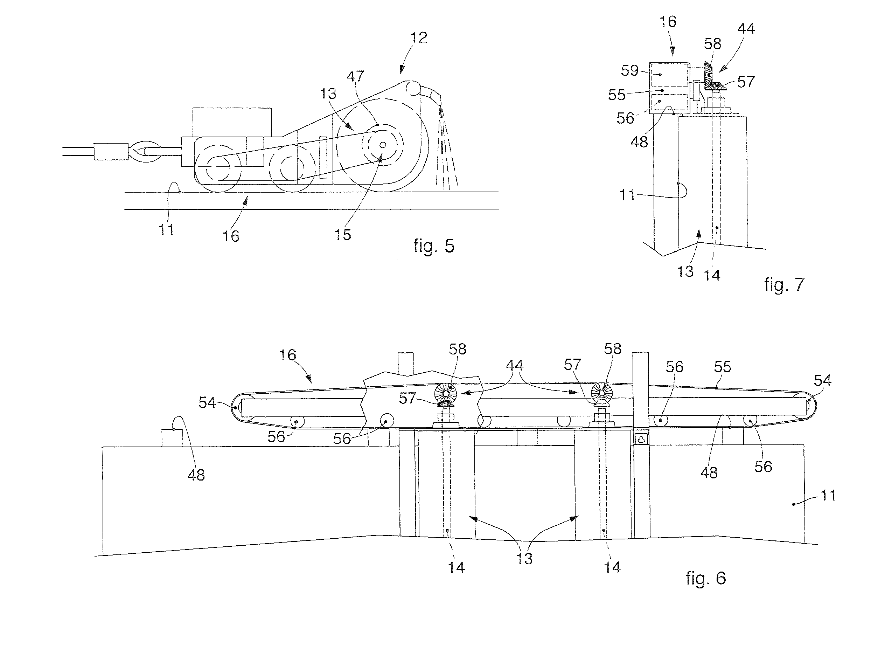

For example, other forms of embodiment, shown for example in figs. 5 and 9, refer to brushes 13 comprising a tubular support element 47 on which the bristles 25 are mounted.

Furthermore, the drive member 15 can comprise one or more motors 53, for example magnetic motors, mounted inside the tubular support element 47 and configured to make rotate the brush 13 to which the motor 53 is associated. The disposition of the motor 53 inside the tubular support element 47 allows to contain the overall bulk of the washing apparatus 10 and to position the motor 53 in a position where it is not directly accessible to the operators, that is, in a position sheltered from possible impacts and the washing liquid used.

In this form of embodiment, the first kinematic connection 37 is provided to reciprocally connect the motor 53 in the tubular support element 47. It can be provided that the first kinematic connection 37 is defined by connection flanges, geometric couplings, same-shape couplings or other.

According to the solution shown in fig. 9, the motor 53 installed inside the tubular support element 47 comprises a flange 65 attached solidly to the drive shaft of the motor 53 and in turn keyed inside the tubular support element 47. The flange 65 can in turn connect to the rotation shaft 14, which transmits motion to other brushes 13 or to the movement units 16, in substantially the same way as described above.

Support means, not shown in the drawings, can be provided to support the motor 53 in a fixed position with respect to the frame 12. The support means themselves, or suitable means, can also perform the function of electric insulation between the cavity inside the tubular support element 47 and the outside, where the washing fluid can flow.

According to a variant, the motor 53 can be the type provided with an internal stator and a rotor located outside, to surround the stator.

According to this form of embodiment, the rotor can be attached directly inside the tubular cavity defined by the tubular support element 47, for example by interference or mechanical connections. The stator, instead, can be attached with connection elements to the frame 12. According to one solution, the stator of the motor 53 can be integrated in the tubular support element 47.

According to this variant, the rotation shaft 14 of the brushes 13 can be defined by the tubular support element 47, and the second kinematic connections 44 can connect to the latter, to allow to actuate the movement units 16. According to this solution, it can be provided for example that toothed or return wheels are directly keyed on the external surface of the tubular support element 47.

According to another variant of the solution described with reference to fig. 9, it can be provided that the washing apparatus 10 is defined by the support frame 12 on which one or more brushes 13 are installed, aligned with each other along the axis of rotation X. It can also be provided that the washing apparatus 10 does not have the movement units 16 and that the frame 12 and the brushes associated with it are movable manually by an operator. To this purpose, the frame 12 can be provided with gripping elements to allow movement by the operators.

The brushes 13 can be driven by said motor 53, located inside the tubular support element 47 of the brushes 13.

According to possible solutions shown in fig. 5, the washing apparatus 10 can also comprise nozzles for delivering the washing liquid, mounted on the frame 12.

In still other forms of embodiment, see for example figs. 6, 7, one of the movement units 16 can be mounted in correspondence with one of the ends of the rotation shaft 14 and can be selectively moved along a perimeter edge 48 of the surface 11 to be treated. The movement unit 16 comprises a belt 55 that winds between two return pulleys 54 to define two segments of the belt 55 substantially parallel to each other and of which a first segment is located resting against the perimeter edge 48.

The segment of belt 55 resting against the perimeter edge 48 can also be supported by support rolls 56 disposed distanced from each other and provided to support the segment of belt 55.

The movement unit 16 can be selectively actuated by the second kinematic connection 44 which in this case is mounted in correspondence with one end of the rotation shaft 14 of the brushes 13.

The second kinematic connection 44 can in this case comprise a pair of conical toothed wheels of which a first conical toothed wheel 57 is mounted integrated with the rotation shaft 14 of the brush 13 and a second conical toothed wheel 58 which provides to drive the belt 55.

In particular, the second conical toothed wheel 58 is mounted coaxial with a drawing wheel 59, which in turn cooperates with the belt 55 to cause it to advance.

In particular, when the rotation shaft 14 is made to rotate, the first conical toothed wheel 57 transmits the motion to the second conical toothed wheel 58, which in turn, by means of the drawing wheel 59, makes the belt 55 rotate. The belt 55, resting on the perimeter edge 48, causes a movement of the whole apparatus 10 on the surface 11.

According to the forms of embodiment in figs. 6 and 7, the second kinematic connection 44 can be mounted both at one end of a rotation shaft 14 of the brushes 13 of the first row 51, and also at one end of a rotation shaft 14 of the brushes 13 of the second row 52.

In this case, both the second kinematic connections 44 act on the movement unit 16.

In some forms of embodiment, see fig. 8 for example, the washing apparatus 10 can be selectively moved by a movement slider 60 which is configured to move the washing apparatus 10 for example between parallel rows 61 of photovoltaic panels. The movement slider 60 can comprise a support platform 62 of the washing apparatus 10, mobile with respect to the support plane on which the movement slider 60 is mobile by leveling members 63. The movement slider 60 can comprise a movable frame 64, on which the leveling members 63 can be installed. The movement slider 60 can also comprise a current generator battery, for convenience not shown in figs. 1-8, located on board to feed the movement slider 60.

The movement slider 60 can also be moved between the rows 61 of photovoltaic panels by a guide with a subterranean antenna (not shown in figs. 1-8).

The guide sends a signal to the movement slider 60 to oblige it to move along a predetermined travel.

It is also clear that, although the present invention has been described with reference to some specific examples, a person of skill in the art shall certainly be able to achieve many other equivalent forms of washing apparatus, having the characteristics as set forth in the claims and hence all coming within the field of protection defined thereby.

## Claims

1. Washing apparatus for a surface (11) comprising:
- a plurality of brushes (13) having a mainly oblong development disposed consecutive and coaxial with respect to each other along an axis of rotation (X) to define a first row (51) of said brushes (13), said brushes (13) being mounted solidly on at least one rotation shaft (14) and selectively rotatable around said axis of rotation (X);
- at least one movement unit (16) configured to move said brushes (13) in a direction of movement (D) transverse to said axis of rotation (X);
- a drive member (15) comprising at least one motor (53) to make said brushes (13) rotate around said axis of rotation (X) and to drive said movement unit (16),
**characterized in that** said drive member (15) comprises a first direct kinematic connection (37) between said motor (53) and said rotation shaft (14), configured to make said first row (51) of brushes (13) rotate around said axis of rotation (X), and a second kinematic connection (44), independent of said first kinematic connection (37), installed in an intermediate position of the length of the rotation shaft (14) and between two of said brushes (13) of said first row (51), and configured to directly connect said rotation shaft (14) and said movement unit (16) and determine the drive of the latter.

2. Washing apparatus as in claim 1, **characterized in that** said first kinematic connection (37) comprises a pinion (35) mounted on a rotation shaft of said motor (53) and configured to transmit motion to a driven toothed wheel (29) mounted solidly on at least one of said brushes (13).

3. Washing apparatus as in any claim hereinbefore, **characterized in that** it comprises a second row (52) of said brushes (13) disposed facing said first row (51) and installed on a respective rotation shaft (14).

4. Washing apparatus as in claim 3, **characterized in that** said motor (53) is kinematically connected to the rotation shaft (14) of said first row (51) and to the rotation shaft (14) of said second row (52) of said brushes (13).

5. Washing apparatus as in claim 4, **characterized in that** it comprises kinematic transmission devices (23) connected between the rotation shaft (14) of said first row (51) and the rotation shaft (14) of said second row (52) to transmit the rotary motion from said first row (51) of said brushes (13) to said second row (52) of said brushes (13).

6. Washing apparatus as in any claim hereinbefore, **characterized in that** said second kinematic connection (44) comprises a drive toothed wheel (38) mounted integrated with said rotation shaft (14) and a driven toothed wheel (42) provided to activate said respective movement unit (16) and kinematically connected to said drive toothed wheel (38).

7. Washing apparatus as in any claim hereinbefore, **characterized in that** said movement unit (16) comprises a plurality of wheels (22) mounted on a support element (46), disposed aligned with each other in a direction parallel to said direction of advance (D), connected to said second kinematic connection (44) and which can be positioned, during use, resting on said surface (11) to be treated.

8. Washing apparatus as in claim 1, **characterized in that** each of said brushes (13) comprises a tubular support element (47) on which bristles (25) are mounted, and **in that** said drive member (15) comprises one or more of said motors (53) mounted inside said tubular support element (47) and configured to make rotate said brush (13) to which said motor (53) is associated, said first kinematic connection (37) being provided to reciprocally connect said motor (53) in said tubular support element (47).

9. Washing apparatus as in claim 8, **characterized in that** said motor (53) is provided with an internal stator and a rotor located externally to surround the stator, and **in that** said rotor is attached directly inside the tubular cavity defined by said tubular support element (47) and the stator is attached, with connection elements, to a support frame (12) of said brushes (13).

10. Washing apparatus as in claim 8 or 9, **characterized in that** said rotation shaft (14) of the brushes (13) is defined by said tubular support element (47), and said second kinematic connections (44) connect to the latter.

11. Washing apparatus as in any claim hereinbefore, **characterized in that** it comprises at least another movement unit (16) mounted in correspondence to one of the ends of said rotation shaft (14) and selectively movable along a perimeter edge (48) of the surface (11) to be treated, **in that** said other movement unit (16) comprises a belt (55) having at least one segment located resting against said perimeter edge (48) and **in that** said second kinematic connection (44) is mounted in correspondence to an end of said rotation shaft (14) of said brushes (13) in order to transmit motion from said rotation shaft (14) to said belt (55).

12. Method to make a washing apparatus that provides to:
- solidly mount a plurality of brushes (13) with a mainly oblong development on a rotation shaft (14), disposing them consecutive and coaxial with respect to each other along an axis of rotation (X) to define a first row (51) of said brushes (13);
- predispose at least a movement unit (16) to move the brushes (13) in a direction of movement (D) transverse to the axis of rotation (X);
- predispose at least a drive member (15) comprising at least one motor (53) to make said brushes (13) rotate around said axis of rotation (X) and to drive said movement unit (16),
**characterized in that** it provides to install, between the motor (53) and the rotation shaft (14), a first kinematic connection (37) to transmit the motion directly from said motor (53) to said brushes (13), and to make the latter rotate around the axis of rotation (X), and to install, in an intermediate position of the length of the rotation shaft (14) and between two of said brushes (13) of said first row (51), a second kinematic connection (44), independent from the first kinematic connection (37), which directly connects the rotation shaft (14) to the movement unit (16).

13. Method for washing a surface that provides to:
- predispose a plurality of brushes (13), installing them on a rotation shaft (14) and disposing them consecutive and coaxial with respect to each other along an axis of rotation (X) to define a first row (51) of said brushes (13);
- move said first row (51) of brushes (13) in a direction of movement (D) transverse to the axis of rotation (X) by means of a movement unit (16);
- drive the rotation of the brushes (13) around the axis of rotation (X) by means of a motor (53);
- drive said movement unit (16) by means of said motor (53);
**characterized in that** said driving of the rotation of said brushes (13) of said first row (51) provides to transmit the motion from said motor (53) to said rotation shaft (14) by means of a first direct kinematic connection (37) between the motor (53) and the rotation shaft (14), and **in that** the driving of the movement unit (16) provides to transmit the motion directly from said rotation shaft (14) to said movement unit (16), by means of a second kinematic connection (44) installed in an intermediate position of the length of the rotation shaft (14) and between two of said brushes (13) of said first row (51).
